# EUROPEAN PATENT APPLICATION

(11) **EP 3 447 266 A1**
(43) Date of publication of application: **27.02.2019**
(21) Application number: 18189629.1
(22) Date of filing: 17.08.2018
(51) Int. Cl.: F02C 6/08, F02C 9/18

(54) **DUCTED ENGINE COMPRESSED BLEED VALVE ARCHITECTURE**

(30) Priority: 17.08.2017 US 201715679808
(71) Applicant: United Technologies Corporation, Farmington, CT 06032 (US)
(72) Inventor: HEIMS, Eric J., Avon, CT 06001 (US); SUCIU, Gabriel L., Glastonbury, CT 06033 (US); MERRY, Brian, Andover, CT 06232 (US)
(74) Representative: Dehns

(57) **Abstract**

An air bleed system (36) for a gas turbine engine (10) includes a compressor case (28), fan panel (26), compartment (34), bleed port (30), bleed valve (48), and duct (42). The compressor case (28) extends circumferentially around a core of the gas turbine engine (10). The fan panel (26) is disposed radially outward from the compressor case (28). The compartment (34) is disposed between the compressor case (28) and fan panel (26). The bleed port (30) extends from the compressor case (28) into the compartment (34). The bleed valve (48) is disposed on an outward end of the bleed port (30) and is configured to selectively occupy an open or a closed position so as to regulate flow of a fluid. The duct (42) extends between the bleed valve (48) and the fan panel (26) and is fluidly connected to the bleed port (30) and to the opening of the fan panel (26). The duct (42) is configured to transport the fluid from the engine core to the fan panel (26) and through the opening (38).

## Description

### BACKGROUND

The subject matter of the present disclosure relates generally to gas turbine engines. More particularly, the subject matter of the present disclosure relates to an improved system for bleeding air from a gas turbine engine.

In gas turbine engines, electrical control components are often placed on the fan case due to the cool debris free environment. In gas turbine engines the compartment cavity aft of the fan case formed by the low pressure compressor and forward of the core compartment firewall is a cool cavity for placement of electrical components. Within this cavity is the low pressure compressor bleed valve used to discharge air, rain, sand, hail, etc. from the core of the engine. The moisture and particulates make the cavity "dirty" and therefore unsuitable for electrical components.

### SUMMARY

An air bleed system for a gas turbine engine includes a compressor case, fan panel, compartment, bleed port, bleed valve, and duct. The compressor case extends circumferentially around a core of the gas turbine engine. The fan panel is disposed radially outward from the compressor case and includes a stated opening. The compartment is disposed radially between the compressor case and the fan panel. The bleed port extends from the compressor case into the compartment. The bleed valve is disposed on a radially outward end of the bleed port and is configured to selectively occupy an open or a closed position so as to regulate flow of a fluid from the engine core to the compartment. The duct extends between the bleed valve and the fan panel and is fluidly connected to the bleed port and to the opening of the fan panel. The duct is configured to transport the fluid from the engine core to the fan panel and through the opening of the fan panel.

A method of discharging air from a core of a gas turbine engine includes diverting a flow of bleed air into a bleed port fluidly attached to the core of the engine. The bleed port extends into a compartment formed by a compressor case and a fan panel of the gas turbine engine. The bleed air is flowed through the bleed port. The bleed air is passed across a bleed valve configured to occupy one of an open or closed position. The bleed air is transported through a duct extending between the bleed valve and the fan panel of the gas turbine engine. The duct is fluidly connected to the bleed port and to an opening in the fan panel. The bleed air is passed from the duct, through the opening in the fan panel, and into a bypass flow of fluid disposed radially outward from the fan panel.

An air bleed system for a gas turbine engine includes a compressor case, fan panel, compartment, bleed port, bleed valve, duct, support ring, and electronic control element. The compressor case extends circumferentially around a core of the gas turbine engine. The fan panel is disposed radially outward from the compressor case and includes an opening and a louver that is configured to direct a fluid out of the opening. The compartment disposed radially between the compressor case and the fan panel. The bleed port extends from the compressor case and into the compartment. The bleed valve is disposed on a radially outward end of the bleed port. The bleed valve is configured to selectively occupy an open or a closed position so as to regulate flow of a fluid from the engine core to the compartment. The duct extends between the bleed valve and the fan panel. The duct is fluidly connected to the bleed port and to the opening of the fan panel and is configured to transport the fluid from the engine core to the fan panel and through the opening of the fan panel. The support ring connects the duct to the bleed valve. The electronic control element disposed in the compartment and attached to the compressor case.

### BRIEF DESCRIPTION OF THE DRAWINGS

FIG. 1 is a cross-section view of a portion of a gas turbine engine.
FIG. 2 is an enlarged cross-section view of an air bleed system of the gas turbine engine.
FIG. 3A is an enlarged cross-section view of the air bleed system shown in an open position.
FIG. 3B is an enlarged cross-section view of the air bleed system shown in a closed position.
FIG. 4 is a perspective view of a portion of the gas turbine engine showing an actuator, a drive linkage, and a valve support.
FIG. 5 is a side view of a portion of the gas turbine engine with electrical components.
FIG. 6 is an enlarged cross-section view of the air bleed system with a support bracket.
FIG. 7 is an enlarged cross-section view of a duct taken along 7-7 in FIG. 1.
FIG. 8 is a top view the duct taken from 8-8 in FIG. 7.

### DETAILED DESCRIPTION

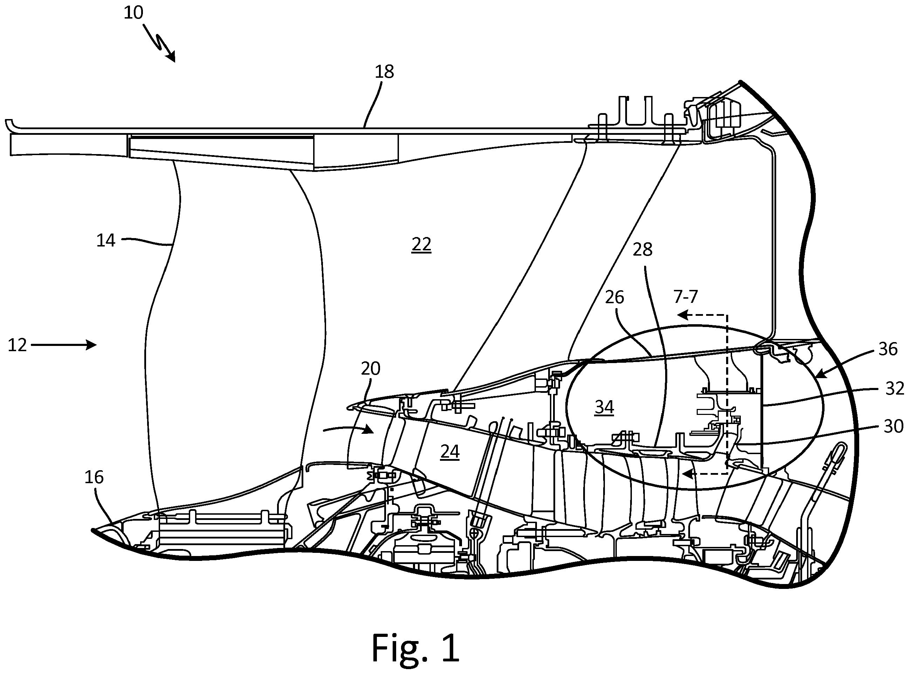

FIG. 1 is a cross-section view of a portion of engine 10 showing air intake port 12, fan blade 14, hub 16, fan case 18, annular shaped splitter 20, fan duct 22, engine core inlet 24, and air bleed system 36. In one non-limiting embodiment, engine 10 is a gas turbine engine of an aircraft. In other non-limiting embodiments, engine 10 can be representative of other types of engines such as an industrial gas turbine engine. Air intake port 12 is an inlet of engine 10 configured to transport a fluid such as air. Fan blade 14 is an apparatus with a plurality of rotating blades. Hub 16 is a generally conical element configured to rotate about an axis. Fan case 18 is a cylindrically shaped encasement. Annular shaped splitter 20 is an annular flow diverting element with a triangular cross section.

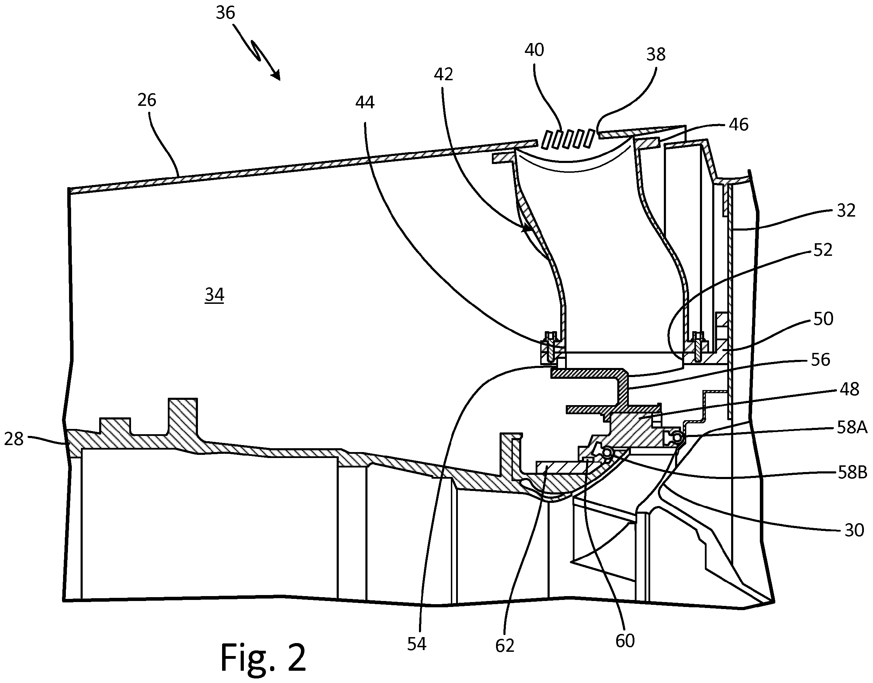

Fan duct 22 is a circumferential wall extending along an inner diameter of fan case 18. Engine core inlet 24 is a fluidic passageway. Fan panel 26 is a circumferential panel. Compressor case 28 is a cylindrically shaped encasement. Bleed port 30 is a fluidic outlet. Firewall 32 is a flat ring or annulus. Compartment 34 is a generally annular cavity or chamber within engine 10. In one non-limiting embodiment, compartment 34 can be what is known in the art as a 2.5 cavity. Air bleed system 36 is an assembly of valve elements (discussed further in FIGS. 2, 3A-3B, and 6).

Engine 10 is attached to an aircraft (not shown). Air intake port 12 is located at an upstream (to the left in FIG. 2) end of engine 10. Air intake port 12 is fluidly connected to fan duct 22 and engine core inlet 24. Fan blade 14 is attached to hub 16 and rotates about a central, rotational axis (not shown) of engine 10. Hub 16 is rotatably engaged with engine 10 such that hub 16 rotates about the central, rotational axis (not shown) of engine 10. Fan case 18 is circumferentially disposed around fan blade 14.

Annular shaped splitter 20 is circumferentially disposed around hub 16 and downstream of (to the right in FIG. 1) fan blade 14. Fan duct 22 is disposed radially outward from annular shaped splitter 20. Engine core inlet 24 is formed along an interior of annular shaped splitter 20. Fan panel 26 is disposed along a radially inward portion of fan duct 22. Fan panel 26 forms a radially outward portion of compartment 34. Compressor case 28 is disposed along a radially outward edge of engine core inlet 24 and forms a radially inward barrier or wall of compartment 34. Bleed port 30 is disposed in and extends from a portion of compressor case 28. Bleed port 30 is fluidly connected to engine core inlet 24 and to bleed valve 48. Firewall 32 forms an aft endwall of compartment 34. Compartment 34 is formed between fan panel 26, compressor case 28, and firewall 32.

In one non-limiting embodiment, air bleed system 36 is disposed in front of engine 10 in an aft portion of a low pressure compressor chamber (e.g., at station 2.5) upstream of an intermediate section and a high pressure compressor chamber of engine 10. Air bleed system 36 is fluidly connected to fan duct 22 and to engine core inlet 24. Additional details of gas turbine engines, such as engine 10, can be found in US Patent No. 9,322,337B2 filed on October 4, 2012 and in US Patent No. 9,638,201B2 filed on June 20, 2012.

As will be discussed further, air passing through engine core inlet 24 can be bled through air bleed system 36 and into bypass air passing through fan duct 22 for stability and operability of engine 10. Here, air bleed system 36 is used to discharge air, rain, sand, hail, and other particulates into compartment 34 which are thus prevented from going into a core of engine 10. In existing designs without air bleed system 36, particulates bled into compartment 34 make compartment 34 "dirty" (e.g., occupied with an environment not suitable for electrical components).

FIG. 2 shows an enlarged cross-section view of air bleed system 36 and includes fan panel 26 (with opening 38 and louver 40), compressor case 28 (with bleed port 30), firewall 32, compartment 34, and air bleed system 36 with duct 42 (including inlet 44 and outlet 46), bleed valve 48, support ring 50, port 52, support seal 54, valve support 56, seals 58A and 58B, inner seal 60, and valve runner 62.

Opening 38 of fan panel 26 is an orifice or vent configured for the passage of a fluid such as air. Louver 40 is a slat panel. Duct 42 is a hollow tube configured for the transmission of a fluid such as air. In one non-limiting embodiment, duct 42 includes a serpentine shape. Inlet 44 and outlet 46 are openings in duct 42. In one non-limiting embodiment, a cross-sectional area of inlet 44 is approximately equal to the cross-sectional area of outlet 46. Bleed valve 48 is a ring or annulus of solid material. Support ring 50 is a hoop or band of solid material with a plurality of ports 52 extending through support ring 50 (a single port 52 is shown in FIG. 2). Support seal 54 is an annular seal element. Valve support 56 is an annular ring of solid material with a plurality of lips and flanges. Seal 58A, seal 58B, and inner seal 60 are annular seal elements. Valve runner 62 is a hoop or band of solid material.

Opening 38 is disposed in a portion of fan panel 26 such that opening 38 is located within an inner diameter of outlet 46 of duct 42 so as to be in fluid communication with duct 42. Louver 40 is integral to fan panel 26 and forms a sealing interface with outlet 46 of fan panel 26. Duct 42 is attached to support ring 50 via fasteners such as screws. Duct 42 is also connected to fan panel 26 at a location of opening 38. Although a single duct 42 is shown in FIG. 2, air bleed system 36 can include a plurality of ducts 42 circumferentially spaced (uniformly or non-uniformly) around support ring 50 and within compartment 34. Inlet 44 and outlet 46 are disposed on opposite ends of duct 42. Inlet 44 of duct 42 is fluidly connected to port 48 of support ring 50. Outlet 46 of duct 42 is fluidly connected to opening 38 of fan panel 26.

Bleed valve 48 is slidably engaged with valve runner 62. Bleed valve 48 is attached and connected to valve support 56. In one non-limiting embodiment, bleed valve 48 can be press fit into an inner diameter of a portion of valve support 56. Support ring 50 is attached to firewall 32 at an aft end of compartment 34 (to the right in FIG. 2). Support ring 50 is attached to duct 42 via fasteners. Port 48 is disposed in a portion of support ring 50 such that port 48 provides a fluidic channel through support ring 50 so as to fluidly connect bleed valve 48 and duct 42. Support seal 54 is mounted to support ring 50 and forms a sealing interface between valve support 56 and support ring 50. Valve support 56 is disposed within compartment 34 and is slidably engaged with support seal 54. Seals 58A and 58B are mounted into portions of bleed valve 48. Inner seal 60 is disposed in a radially inward portion of bleed valve 48. Valve runner 62 is mounted to a portion of compressor case 28 such that valve runner 62 is affixed to compressor case 28 and does not move relative to compressor case 28.

Valve Support 56 functions to move bleed valve 48 in a linear and axial direction so as to open and close bleed valve 48. Depending on the operational condition of engine 10, bleed valve 48 is controlled to occupy an open or a closed position. Along with seals 58A and 58B, bleed valve 48 is configured to form a sealing interface with portions of compressor case 28 so as to open and close a pathway for bleed air to pass from engine core inlet 24, through duct 42, and into fan duct 22 (e.g., into nacelle bypass air passing through fan duct 22). In one non-limiting embodiment, the bleed air drawn across bleed valve 48 and into duct 42 can come from a low pressure compressor of engine 10 as the air transitions into a high pressure compressor of engine 10.

When bleed valve 48 occupies a closed position, seals 58A and 58B form a sealing interface between bleed valve 48 and compressor case 28 thereby closing a fluid connection between engine core inlet 24 and fan duct 22 and preventing a flow of bleed air to flow past bleed valve 48 into duct 42. Inner seal 60 forms a sealing interface between bleed valve 48 and valve runner 62.

In existing configurations without duct 42, air bled into compartment 34 would cause any moisture and/or particulates in the bleed air to infiltrate compartment 34 thereby creating a dirty and wet environment within compartment 34 unsuitable for electronic control devices. Using duct 42 to transport bleed air from engine core inlet 24 through compartment 34 and directly into a nacelle bypass air flow passing through fan duct 22 allows for the prevention of ingress of moisture and particulates into compartment 34 thereby creating a "dry and cool" environment in compartment 34. The dry and cool environment within compartment 34 allows for the mounting of hardware used to control portions of engine 10 due to the absence of wet, dirty, and/or turbulent air. The benefit of air bleed system 36 is that fan case 18 (shown in FIG. 1) is completely cleared of any hardware used to control engine 10. This allows for a smaller fan cowl (not shown) over fan case 18 thereby reducing drag on engine 10. Also, a translating thrust reverser (not shown) of engine 10 now has more room to be stored, which shortens the nacelle to reduce drag on engine 10. Air bleed system 36 also allows for the thrust reverser and fan cowl to be integrated into a single unit.

An additional benefit is the reduction of weight and cost associated with electrical harnesses from the core of engine 10 to control boxes. By locating electrical controls in compartment 34, a length of a harness (not shown) is reduced further reducing the weight (e.g., reduction of 10 to 20 lbs. (4.5 to 9.1 kg)) and overall cost of engine 10.

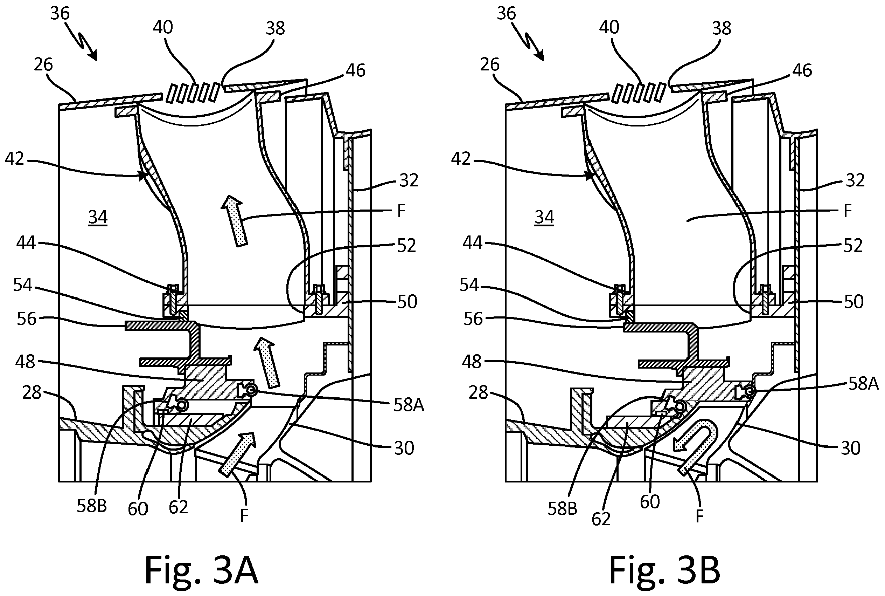

FIG. 3A is an enlarged cross-section view of air bleed system 36 with bleed valve 48 shown in an open position. With bleed valve 48 in an open position, seals 58A and 58B are separated from compressor case 28 thereby opening, or creating, a fluid connection between engine core inlet 24 and fan duct 22. This allows flow F of bleed air to flow past bleed valve 48, through port 48 in support ring 50, into inlet 44 of duct 42, through duct 42, out of outlet 46 of duct 42, through opening 38 of fan panel 26, and into fan duct 22.

Bleed valve 48 is opened based upon a pre-determined operation schedule for engine 10. In some non-limiting embodiments, operating conditions of engine startup, take-off, and landing can include operational modes during which bleed valve 48 is opened to draw any dust, debris, or moisture out of engine core inlet 24. During engine startup, bleed valve 48 is opened to relieve pressure on the compressor. Additionally, bleed valve 48 is opened during descent of the aircraft to slow engine 10 down by removing air pressure from engine core inlet 24.

FIG. 3B is an enlarged cross-section view of air bleed system 36 with bleed valve 48 shown in a closed position. With bleed valve 48 in a closed position, seals 58A and 58B are in contact with compressor case 28 thereby closing the fluid connection between engine core inlet 24 and fan duct 22 and preventing flow F of bleed air to flow past bleed valve 48 and into duct 42. Closure of bleed valve 48 is also based upon a pre-determined operation schedule for engine 10. In one non-limiting embodiment, bleed valve 48 is closed during all operational modes of engine 10 except during engine startup, take-off, and landing of the aircraft.

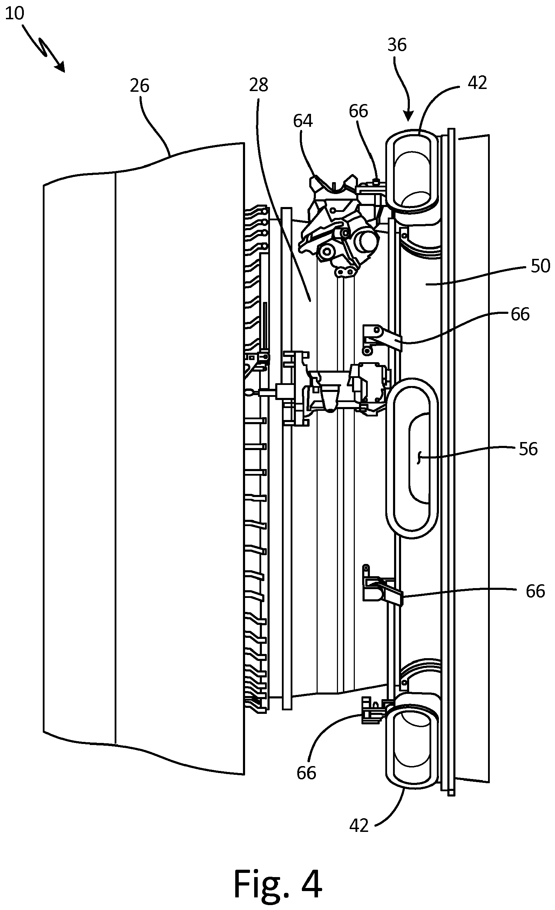

FIG. 4 is a perspective view of a portion of engine 10 showing a portion of fan panel 26, compressor case 28, air bleed system 36, ducts 42, support ring 50, valve support 56, bleed actuator 64, and drive linkages 66. Bleed actuator 64 drives the opening of bleed valve 48 through drive linkages 66 that are secured directly to valve support 56. In some non-limiting embodiments, bleed actuator 64 can include an electronic, hydraulic, pneumatic, mechanical, or magnetic actuator. Drive linkages 66 are physical elements configured to manage movement.

Bleed actuator 64 is mounted to a portion of compressor case 28 via fasteners. Bleed actuator 64 is connected to one of drive linkages 66 by way of rotatable or pivotal attachment with a drive arm or piston of bleed actuator 64. Bleed actuator 64 is electrically connected to an electronic control system of engine 10 such as a full authority digital engine control ("FADEC"; not shown). Drive linkages 66 are attached to valve support 56. At least one of drive linkages 66 is attached to the drive arm or piston of bleed actuator 64. In one non-limiting embodiment, a portion of at least one of drive linkages 66 can be mounted or rotatably connected to support ring 50. In another non-limiting embodiment, a portion of at least one of drive linkages 66 can be mounted or rotatably connected to compressor case 28.

Upon receiving control signals from an electronic control system of engine 10 (such as the FADEC), bleed actuator 64 moves drive linkage 66 along a linear or oscillating pathway. As drive linkage 66 is moved by bleed actuator 64, drive linkage 66 causes valve support 56 to move thereby causing bleed valve 48 to open or close. Drive linkage 66 is configured to move valve support 56 along a generally axial direction such that valve support 56 causes bleed valve 48 to move along an axially oriented pathway.

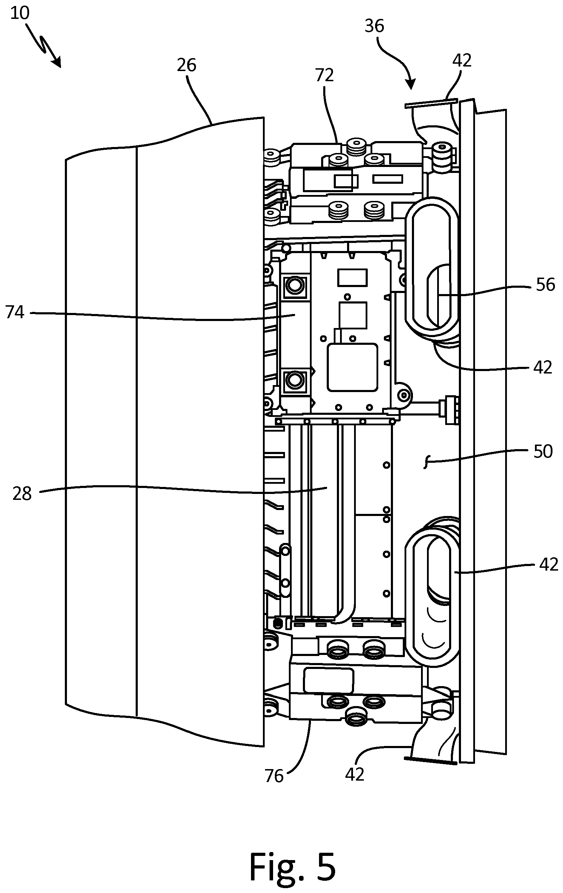

FIG. 5 is a side view of a portion of engine 10 showing fan panel 26, compressor case 28, air bleed system 36, ducts 42, support ring 50, valve support 56, electronic engine controller ("EEC") 72, prognostics and health management unit ("PHMU") 74, and exciter 76. EEC 72 is an electronic control unit. PHMU 74 is an electronic component configured to manage system lifecycles of engine 10 and its components. Exciter provides electrical energy to the igniters to start engine 10.

EEC 72, PHMU 74, and exciter 76 are mounted to portions of compressor case 28 within compartment 34 (shown in FIGS. 2, 3A, and 3B). In some non-limiting embodiments, EEC 72, PHMU 74, and exciter 76 can be partially mounted to support ring 50 of air bleed system 36. In another non-limiting embodiment, EEC 72, PHMU 74, and exciter 76 can be electrically connected to the FADEC of engine 10. Each of EEC 72, PHMU 74, and exciter 76 are configured to either monitor or control elements of engine 10.

EEC 72, PHMU 74, and exciter 76 require a dry and clean environment to function so as to not short circuit or become damaged due to moisture, debris, or windage. Air bleed system 36 with ducts 42 prevents moisture, debris, and windage from entering into compartment 34 thereby creating a dry, clean space within which EEC 72, PHMU 74, and exciter 76 can be stored and operated. By locating EEC 72, PHMU 74, and exciter 76 in compartment 34, EEC 72, PHMU 74, and exciter 76 are now closer to other electrical components that EEC 72, PHMU 74, and exciter 76 are electrically connected to via wire harnesses (not shown). This provides for a reduction in the amount of harness wiring thereby reducing the over-all weight of engine 10.

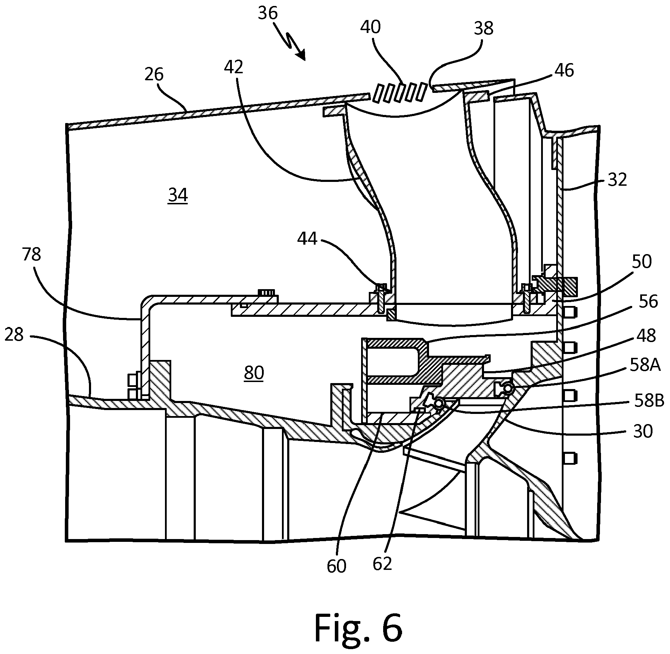

FIG. 6 is an enlarged cross-section view of air bleed system 36 showing fan panel 26 (with opening 38 and louver 40), compressor case 28, bleed port 30, firewall 32, compartment 34, and air bleed system 36 with duct 42 (including inlet 44 and outlet 46), bleed valve 48, support ring 50, valve support 56, seals 58A and 58B, inner seal 60, valve runner 62, support bracket 78, and plenum 80.

Support bracket 78 is an L-shaped bracket of solid material. Plenum 80 is a chamber or cavity. Support bracket 78 is mounted to support ring 50 and to compressor case 28 via fasteners. Plenum 80 is disposed and formed in the cavity created by compressor case 28, fire wall 30, support ring 50, and support bracket 78. Plenum 80 forms a cavity configured to contain a fluid such as air. Support bracket 78 functions to further contain bleed air bled from engine core inlet 24 within plenum 80 thereby preventing the bleed air from swirling about compartment 34.

The use of support bracket 78 as part of air bleed system 36 provides an additional option for supporting components such as an additional, clean platform on which to mount electrical components such as EEC 72, PHMU 74, and/or exciter 76. Although support bracket 78 adds a small amount of extra weight to air bleed system 36, support bracket 78 provides more effective sealing of the flow of bleed air (than without support bracket 78) by adding an additional barrier that prevents bleed air from passing into a main area of compartment 34.

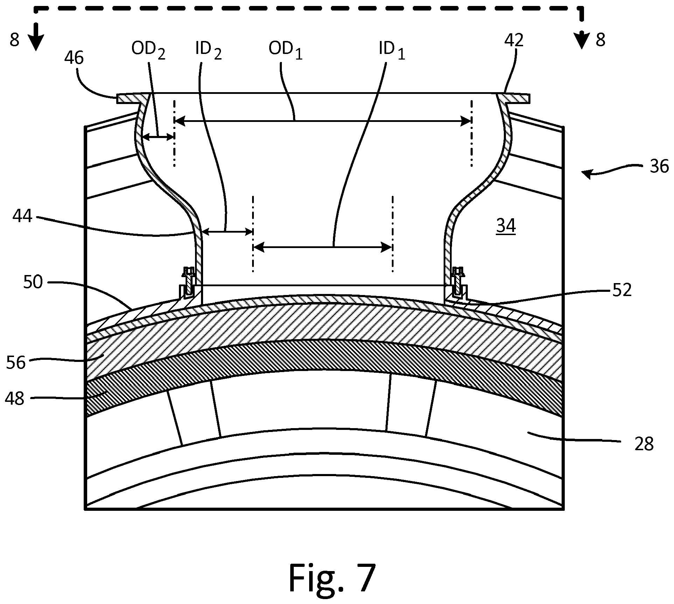

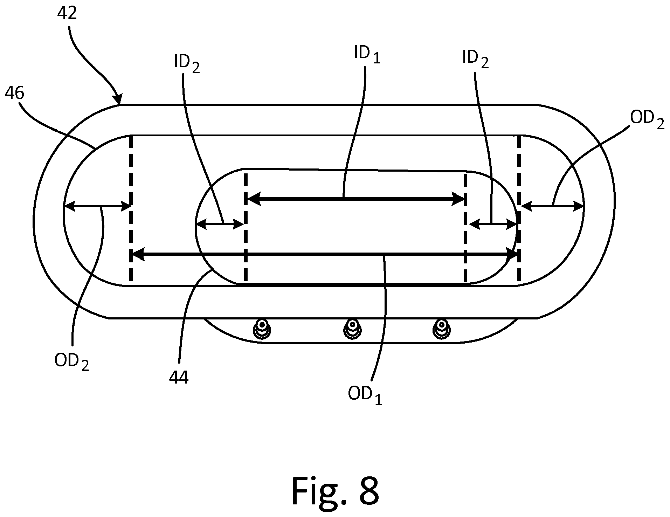

FIG. 7 is an enlarged cross-section view of duct 42 taken along 7-7 in FIG. 1 that shows compressor case 28, compartment 34, air bleed system 36, duct 42 (with inlet 44 and outlet 46), bleed valve 48, support ring 50 (with port 52), and valve support 56. FIG. 7 also shows inlet 44 as including first inlet distance ID₁ and second inlet distance OD₁. FIG. 7 further shows outlet 46 as including first outlet distance OD₁ and second outlet distance OD₂. FIG. 8 is a top view of duct 42 taken along 8-8 in FIG. 7 and shows inlet 44 (with first inlet distance ID₁ and second inlet distance OD₁) and outlet 46 (with first outlet distance OD₁ and second outlet distance OD₂). Because FIGS. 7 and 8 discuss similar elements, FIGS. 7 and 8 will be discussed in unison.

As can be seen in FIG. 8 (and in FIGS. 4 and 5), duct 42 includes a generally oval shape, or a rectangular shape with rounded corners. First inlet distance ID₁ is a distance spanning across a first portion of inlet 44 that extends along the length of a longitudinal portion of inlet 44. Second inlet distance ID₂ is a distance spanning across a second portion of inlet 44 2 that extends from an end of first inlet distance ID₁ to a rounded end of inlet 44. First outlet distance OD₁ is a distance spanning across a first portion of outlet 46 that extends along the length of a longitudinal portion of outlet 46. Second outlet distance OD₂ is a distance spanning across a second portion of outlet 46 that extends from an end of first outlet distance OD₁ to a rounded end of outlet 46.

In one non-limiting embodiment, first inlet distance ID₁ can include a value of 4.0 inches (10.2 centimeters), second inlet distance ID₂ can include a value of 1.5 inches (3.8 centimeters), first outlet distance OD₁ can include a value of 8.0 inches (20.3 centimeters), and second outlet distance OD₂ can include a value of 1.5 inches (3.8 centimeters). In another non-limiting embodiment, first outlet distance OD₁ can be greater than first inlet distance ID₁ and second outlet distance OD₂. In another non-limiting embodiment, first inlet distance ID₁ can be greater than second inlet distance ID₂ while second inlet distance ID₂ can be approximately equal to second outlet distance OD₂.

In one non-limiting embodiment, a sum of the cross-sectional areas of all of inlets 44 of ducts 42 can be approximately equal to the area of the opening at the interface of the compressor case 28 and bleed valve 48 created when bleed valve 48 occupies an open position. Having the sum of the cross-sectional areas of all of inlets 44 of ducts 42 can be approximately equal to the area of the opening at the interface of the compressor case 28 and bleed valve 48 created when bleed valve 48 occupies an open position prevents choking the flow of the bleed air from engine core inlet 24 to fan duct 22 and also prevents causing back pressure in the flow of bleed air. Accordingly, a cross-sectional area of each of openings 38 of fan panel 26 can also be approximately equal to a cross-sectional area of inlet 44 or outlet 46 of a respective duct 42.

In another non-limiting embodiment, a sum of the cross-sectional areas of all of inlets 44 of ducts 42 can be greater than the area of the opening at the interface of the compressor case 28 and bleed valve 48 created when bleed valve 48 occupies an open position.

### Discussion of Possible Embodiments

The following are non-exclusive descriptions of possible embodiments of the present invention.

An air bleed system for a gas turbine engine includes a compressor case, fan panel, compartment, bleed port, bleed valve, and duct. The compressor case extends circumferentially around a core of the gas turbine engine. The fan panel is disposed radially outward from the compressor case and includes an opening. The compartment is disposed radially between the compressor case and the fan panel. The bleed port extends from the compressor case into the compartment. The bleed valve is disposed on a radially outward end of the bleed port and is configured to selectively occupy an open or a closed position so as to regulate flow of a fluid from the engine core to the compartment. The duct extends between the bleed valve and the fan panel and is fluidly connected to the bleed port and to the opening of the fan panel. The duct is configured to transport the fluid from the engine core to the fan panel and through the opening of the fan panel.

The air bleed system of the preceding paragraph can optionally include, additionally and/or alternatively, any one or more of the following features, configurations, and/or additional components.

A firewall can be disposed on an axial end of the compartment, and/or a support ring can be attached to the firewall, wherein the support ring can connect the duct to the bleed valve.

A support bracket can be disposed in the compartment, wherein the support bracket can be attached to and/or extend from the support ring and/or can be mounted to the compressor case.

An actuator can be connected to the compressor case; a drive linkage can be operably connected to the actuator; and a valve support can be attached to the drive linkage and/or to the bleed valve, wherein the valve support can be configured to move the bleed valve into one of an open or closed position.

An electronic control element can be disposed in the compartment and/or attached to the compressor case.

The electronic control element can comprise at least one of an electronic engine controller, a prognostics health management unit, and/or an exciter.

A method of discharging air from a core of a gas turbine engine includes diverting a flow of bleed air into a bleed port fluidly attached to the core of the engine. The bleed port extends into a compartment formed by a compressor case and a fan panel of the gas turbine engine. The bleed air is flowed through the bleed port. The bleed air is passed across a bleed valve configured to occupy one of an open or closed position. The bleed air is transported through a duct extending between the bleed valve and the fan panel of the gas turbine engine. The duct is fluidly connected to the bleed port and to an opening in the fan panel. The bleed air is passed from the duct, through the opening in the fan panel, and into a bypass flow of fluid disposed radially outward from the fan panel.

The method of the preceding paragraph can optionally include, additionally and/or alternatively, any one or more of the following features, configurations, steps, and/or additional components.

Debris in the bleed air can be prevented from entering into the compartment.

A position of the bleed valve can be controlled with an actuator that is electrically connected to an electronic control element.

The electronic control element can be mounted in the compartment.

The bleed valve can be moved into an open position with an actuator that can be connected to the compressor case; the core of the engine can be fluidly connected to the bypass flow; and the debris in the bleed air can be guided through the bleed port, into the duct, through the opening of the fan panel, and/or into the bypass flow.

The bleed air can be prevented from spreading throughout the compartment by containing the bleed air in the duct as the bleed air is transported through the duct.

The bleed valve based on a pre-determined schedule.

The bleed valve during at least one of engine startup, take-off, and landing.

A louver connected to the opening of the fan panel can be opened and the bleed air can be released out of the duct.

The bleed air can be directed into the bypass flow with the louver.

The bleed air can be prevented from spreading throughout the compartment by containing the bleed air in a plenum formed by a support bracket disposed in the compartment, wherein the support bracket is mounted to the compressor case.

An air bleed system for a gas turbine engine includes a compressor case, fan panel, compartment, bleed port, bleed valve, duct, support ring, and electronic control element. The compressor case extends circumferentially around a core of the gas turbine engine. The fan panel is disposed radially outward from the compressor case and includes an opening and a louver that is configured to direct a fluid out of the opening. The compartment disposed radially between the compressor case and the fan panel. The bleed port extends from the compressor case and into the compartment. The bleed valve is disposed on a radially outward end of the bleed port. The bleed valve is configured to selectively occupy an open or a closed position so as to regulate flow of a fluid from the engine core to the compartment. The duct extends between the bleed valve and the fan panel. The duct is fluidly connected to the bleed port and to the opening of the fan panel and is configured to transport the fluid from the engine core to the fan panel and through the opening of the fan panel. The support ring connects the duct to the bleed valve. The electronic control element disposed in the compartment and attached to the compressor case.

The air bleed system of the preceding paragraph can optionally include, additionally and/or alternatively, any one or more of the following features, configurations, and/or additional components.

A support bracket can be disposed in the compartment, wherein the support bracket can be attached to and/ extend from the support ring and/or can be mounted to the compressor case.

The electronic control element can comprise at least one of an electronic engine controller, a prognostics health management unit, and/or an exciter.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An air bleed system (36) for a gas turbine engine (10), comprising:
a compressor case (28) extending circumferentially around a core of the gas turbine engine (10);
a fan panel (26) disposed radially outward from the compressor case (28), the fan panel (26) having an opening (38);
a compartment (34) disposed radially between the compressor case (28) and the fan panel (26);
a bleed port (30) extending from the compressor case (28) and into the compartment (34);
a bleed valve (48) disposed on a radially outward end of the bleed port (30), and configured to selectively occupy an open or a closed position so as to regulate flow of a fluid from the engine core to the compartment (34); and
a duct (42) extending between the bleed valve (48) and the fan panel (26), wherein the duct (42) is fluidly connected to the bleed port (30) and to the opening of the fan panel (26), and the duct (42) is configured to transport the fluid from the engine core to the fan panel (26) and through the opening (38) of the fan panel (26).

2. The air bleed system of claim 1, further comprising:
a firewall (32) disposed on an axial end of the compartment (34); and
a support ring (50) attached to the firewall (32), wherein the support ring (50) connects the duct (42) to the bleed valve (48).

3. The air bleed system of claim 2, further comprising a support bracket (78) disposed in the compartment (34), wherein the support bracket (78) is attached to and extends from the support ring (50) and is mounted to the compressor case (28).

4. The air bleed system of claim 1, 2 or 3, further comprising:
an actuator (64) connected to the compressor case (28);
a drive linkage (66) operably connected to the actuator (64); and
a valve support (56) attached to the drive linkage (66) and to the bleed valve (48), wherein the valve support (56) is configured to move the bleed valve (48) into one of said open or closed positions.

5. The air bleed system of any preceding claim, further comprising an electronic control element disposed in the compartment (34) and attached to the compressor case (28), wherein the electronic control element optionally comprises at least one of an electronic engine controller (72), a prognostics health management unit (76), and an exciter (74).

6. A method of discharging air from a core of a gas turbine engine (10), the method comprising:
diverting a flow of bleed air into a bleed port (30) fluidly attached to the core of the engine (10), wherein the bleed port (30) extends into a compartment (34) formed by a compressor case (28) and a fan panel (26) of the gas turbine engine (10);
flowing the bleed air through the bleed port (30);
passing the bleed air across a bleed valve (48), wherein the bleed valve (48) is configured to occupy one of an open or a closed position;
transporting the bleed air through a duct (42), wherein the duct (42) extends between the bleed valve (48) and the fan panel (26) of the gas turbine engine (10), and is fluidly connected to the bleed port (30) and to an opening (38) in the fan panel (26); and
passing the bleed air from the duct (42), through the opening (38) in the fan panel (26), and into a bypass flow of fluid disposed radially outward from the fan panel (26).

7. The method of claim 6, further comprising preventing debris in the bleed air from entering into the compartment (34).

8. The method of claim 6 or 7, further comprising controlling a position of the bleed valve (48) with an actuator (64) that is electrically connected to an electronic control element.

9. The method of claim 8, wherein the electronic control element is mounted in the compartment (34).

10. The method of any of claims 6 to 9, further comprising:
moving the bleed valve (48) into an open position with an or the actuator (64) connected to the compressor case (28);
fluidly connecting the core of the engine (10) to the bypass flow; and
guiding debris in the bleed air through the bleed port (30), into the duct (42), through the opening (38) of the fan panel (26), and into the bypass flow.

11. The method of any of claims 6 to 10, further comprising preventing the bleed air from spreading throughout the compartment (34) by containing the bleed air in the duct (42) as the bleed air is transported through the duct (42).

12. The method of any of claims 6 to 11, further comprising opening the bleed valve (48) based on a pre-determined schedule.

13. The method of any of claims 6 to 12, further comprising opening the bleed valve (48) during at least one of engine startup, take-off, and landing.

14. The method of any of claims 6 to 13, further comprising opening a louver (40) connected to the opening (38) of the fan panel (26) and releasing the bleed air out of the duct (42) and, optionally, directing the bleed air into the bypass flow with the louver (40).

15. The method of any of claims 6 to 10, further comprising preventing the bleed air from spreading throughout the compartment (34) by containing the bleed air in a plenum (80) formed by a support bracket (78) disposed in the compartment (34), wherein the support bracket (78) is mounted to the compressor case (28).
